**Europäisches Patentamt**

**European Patent Office**

**Office européen des brevets**

(19)

(11) **EP 1 496 028 A1**

(12) **EUROPEAN PATENT APPLICATION**

| | |
|---|---|
| (43) Date of publication:<br>**12.01.2005 Bulletin 2005/02** | (51) Int Cl.⁷: **C04B 18/24**, C04B 28/02<br>// C04B111/52 |

(21) Application number: **03425446.6**

(22) Date of filing: **07.07.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Toscano, Gianfranco**<br>**10078 Venaria Reale (TO) (IT)** | (72) Inventor: **Toscano, Gianfranco**<br>**10078 Venaria Reale (TO) (IT)**<br><br>(74) Representative: **Robba, Pierpaolo et al**<br>**Interpatent,**<br>**Via Caboto 35**<br>**10129 Torino (IT)** |

(54) **Cement mixture for preparing water-based hardenable mixings intended to realise soundproofing agglomerates and method for preparing said mixings**

(57) The invention regards a cement mixture, comprising cellulose, for preparing water-based hardenable mixings intended to realise soundproofing agglomerates and suitable for laying or for producing manufactured articles. The invention further regards a method for preparing said hardenable mixings, by feeding air, and a cement-based soundproofing agglomerate obtained from said mixture.

**Description**

## DISCLOSURE OF THE INVENTION

The present invention refers to cement-based mixtures.

More particularly, the present invention refers to a cement mixture for preparing water-based hardenable mixings intended to produce soundproofing agglomerates and suitable for laying or for producing manufactured articles in the building field.

The invention further regards a method for preparing said hardenable mixings.

The invention further regards a cement-based soundproofing agglomerate obtained from said mixture.

Cement-based mixtures are known, containing additional materials of different kinds contributing to the structure soundproofing properties, that are employed in the building field such as filling for floor foundations or, in the form of panels, bricks or tiles, such as wall covers.

Said additional materials, besides having soundproofing properties, must also combine lightness and compression resistance features.

The main purpose of the present invention is to provide a cement-based mixture that, suitably water-supplemented, allows to obtain an agglomerate having soundproofing, lightness and step-steadiness properties improved in comparison with the ones reachable by mixtures according to the known prior art.

The aforementioned and further purposes of the invention are achieved by the cement mixture as well as by the method as defined in the attached claims.

Thanks to the cement mixture according to the invention, which provides for the addition of cellulose, the advantage of obtaining an improvement of the agglomerate soundproofing properties is achieved, said agglomerate being either laid at the liquid state onto floor foundations or employed for manufacturing products of any shape and size, such as panels, bricks and tiles.

Furthermore, advantageously, a light and nevertheless mechanically resistant agglomerate is produced.

Furthermore, advantageously, by employing easily available and not particularly valuable materials, the agglomerate proves to be rather economical.

As far as the manufacturing method is concerned, it also allows to optimise operational times and costs by using a conventional building concrete-mixer fit for continuous operation.

Further features and advantages will become evident from the description of a preferred embodiment of the present invention, which will be better disclosed with reference to a sample case.

The cement mixture according to the invention, suitable for preparing water-based hardenable mixings intended to produce soundproofing agglomerates, is obtained by adding some cellulose to the cement.

The cellulose employed can be in the form of both fibres and paper or cardboard or the like, even recycled.

In case cellulose is in the form of fibres, said fibres will preferably have a length in the range of $0 \div 10$ mm and a diameter in the range of $0 \div 10$ mm.

In case cellulose is in the form of paper products, even recycled, the pieces of said paper and/or cardboard products will preferably have size less than 100 mm$^2$.

Besides cellulose, in the mixture can be optionally added some cork, which can be in the form of both granules and powder; in case cork granules are used, they will preferably have size less than 100 mm$^2$.

Cork, even not being an essential component, allows to significantly increase the value of noise reduction; on the basis of the experimental tests carried out, it has been noticed that, thanks to the cork presence, the noise reduction value has increased by about 3 dB.

Besides cellulose, and in case also additionally to cork, in the mixture can be optionally added some polystyrene, preferably ground.

Polystyrene is added in order to introduce air, which is needed to obtain the cement-based soundproofing agglomerate starting from the mixture according to the invention.

Alternatively, air can be fed in the form of foam (like soap or another commercial foam).

The ratio of cement to air can vary so as to obtain an agglomerate density preferably varying between 200 kg/m$^3$ (value below which the obtained covering is no more step-steady) and 600 kg/m$^3$ (value above which there is no more the beneficial soundproofing result).

Besides cellulose, and in case also additionally to cork and/or polystyrene, in the mixture can be optionally added a coloured pigment, preferably iron oxide.

The coloured pigment is added in order to give the agglomerate a colour such as to differentiate the new agglomerate with respect to the conventional cement materials; in case iron oxide is added, the colour will be reddish.

Upon the cement-based soundproofing agglomerate obtained starting from the mixture according to the invention, laid onto a floor foundation, can be further placed a layer of tarred paper, acting as a separation intermediate layer; said layer of tarred paper has preferably a thickness of 0,5 mm.

Alternatively, upon the agglomerate can be placed a nylon layer acting as a separation intermediate layer.

Upon the arrangement so realised and, particularly, upon the intermediate layer, of tarred paper or nylon, a floor can be placed.

The method according to the invention for preparing water-based hardenable mixings intended to produce soundproofing agglomerates starting from a cement mixture, comprises the steps of:

- preparing a certain quantity of cement, cellulose and water;
- mixing said cement, cellulose and water till obtaining a hardenable mixing suitable for laying or for producing manufactured articles.

Since the method according to the invention employs a technology known to a person skilled in the field, said technology will not be disclosed in detail.

Besides the components mentioned above, a certain quantity of air is introduced by force inside said mixing; said air quantity can be conveyed by a foam or, alternatively, by a spongy material such as, for instance, ground polystyrene.

In case air is conveyed by means of foam, said foam is preferably a commercial foam or a foam obtainable either by transforming a foaming liquid product or by mixing soap with water.

Optionally, a certain quantity of cork pieces or powder can be inserted.

Optionally, a certain quantity of a coloured pigment can be further inserted.

The method according to the invention is carried out by using a building concrete-mixer; preferably, said concrete-mixer is started-up before introducing the raw materials and it is continuously operated (i.e. the concrete-mixer starts working from the introduction of water), this helping to achieve a better agglomerate mixing, which is liquid when laid onto floor foundations or during the manufactured articles production.

If foam is used to convey air, the components constituting the agglomerate are inserted in accordance with the following sequence: water; a portion of cement (for instance, 50 kg); cellulose and, optionally, cork; foam and the remaining portion of cement.

If polystyrene is used to convey air instead, the components constituting the agglomerate are inserted in accordance with the following sequence: water; a portion of cement (for instance, 50 kg); cellulose and, optionally, cork; polystyrene and the remaining portion of cement.

Moreover, experimental tests have been carried out at a certified Institute having shown that a significant noise reduction is attained by a soundproofing agglomerate according to the invention with density in the range $200 \div 600$ kg/m$^3$.

According to the Applicant, the soundproofing effects attained by the mixture according to the invention, and by the resulting agglomerate, are extremely favourable, further to the inventiveness of the mixture composition, which contains cellulose inside a cement material.

As far as the laboratory tests are more specifically concerned, they were carried out by using a sample constituted as follows; it is to be noticed that the quantities referred to are the ones needed to obtain 1 m$^3$ of agglomerate:

- cement     210 kg
- cellulose fibres     10 kg
- granular cork     90 l
- air     as much as it is necessary to obtain 1 m$^3$ of agglomerate.

Said sample was characterised by a density of 320 kg/m$^3$ and by a thickness of about 50 mm.

The results obtained were extremely satisfactory, since the tested material noise reduction resulted of 21 dB.

The level reduction of the impact noise of the agglomerate according to the invention was assessed on a test sample; the test was carried out according to the regulations of laboratory internal procedures, by construing the results according to the regulations of rule ISO 717 - Part 2.

The sample subjected to the test was formed by the assembly of three slabs of agglomerate, each having the composition and the features mentioned above, of size:

- nominal length of the single slab = 500 mm;
- nominal width of the single slab = 500 mm;
- nominal thickness of the single slab = about 50 mm.

A sheet of tarred paper, having thickness of 0,5 mm, was located upon the agglomerate slabs.

The sample was placed between a test floor made of reinforced concrete, having thickness of 140 mm, and a screed made of "pietra serena", having thickness of 40 mm and superficial density of 128 kg/m$^3$.

Said slabs were arranged in a "T" shape and the standardised impact apparatus (Mod. "3204" by Brüel & Kjær) employed for the test was operated in a first horizontal position, along the "T" arm, and subsequently in a second vertical position, along the "T" leg.

The level of generated noise was measured in a receiving chamber, having been characterised through the reverberation time, by means of the spectrum analyser in the frequency range comprised between 100 Hz and 3150 Hz; an analogous measurement was performed by operating the standardised impact apparatus on the screed made of "pietra serena", directly put in contact with the test floor made of reinforced concrete.

The results evaluation procedure was realised with the aid of the standardised curves according to the rule ISO 717 - Part 2, mentioned above.

The comparative analysis of the results quantitatively provided the level reduction of the impact noise due to the contribution of the test sample.

The value of the level of the impact acoustic pressure "L" was calculated, for each frequency band, by using the following formula:

$$L = L_i + 10 \cdot \log A/A_0$$

wherein:

$L_i$ = mean level of the acoustic pressure in the receiving chamber, expressed in dB;

$A_0$ = value of the reference surface, equal to 10 $m^2$;

$A$ = equivalent acoustic absorption surface of the receiving chamber, expressed in $m^2$, calculated in its turn by using the following formula:

$$A = 0{,}16 \cdot V/T$$

wherein:

$V$ = volume of the receiving chamber, expressed in $m^3$, equal to 69 $m^3$;

$T$ = reverberation time, expressed in s.

The environmental conditions during the test were the following:

- mean environmental temperature = 12 °C;
- relative humidity = 35%.
  The test result caused the following evaluation indexes at 500 Hz, within the band of frequencies comprised between 100 Hz and 3150 Hz;
- floor + screed: **I₁ = 76 dB**
- floor + test sample + screed: **I₂ = 55 dB,**

thereby the value of noise reduction equal to 21 dB mentioned above.

Notwithstanding the invention has been disclosed with reference to preferred constructions, it is in general susceptible of further applications and variations that are intended to be included within the protective scope, as it will be evident for the expert of the field.

In particular, notwithstanding the method according to the invention provides for the employment of a conventional building concrete-mixer, similar application and results can be achieved in case the mixing occurs in a different equipment and, notably, when the agglomerate instead of being laid onto floor foundations, is employed for producing manufactured articles such as panels, bricks and tiles.

## Claims

1. A cement mixture for preparing water-based hardenable mixings intended to realise soundproofing agglomerates, **characterised in that** it comprises cellulose.

2. A mixture according to claim 1, wherein said cellulose is in the form of fibres.

3. A mixture according to claim 1, wherein said cellulose is in the form of paper or cardboard or the like.

4. A mixture according to claim 1, further comprising cork.

5. A mixture according to claim 4, wherein said cork is in the form of granules or powder.

6. A mixture according to claim 1 or 4, further comprising polystyrene.

7. A mixture according to claim 1 or 4 or 6, further comprising a coloured pigment.

8. A method for preparing water-based hardenable mixings intended to realise soundproofing agglomerates starting from a cement mixture, **characterised in that** it comprises the steps of:

   - preparing a certain quantity of cement, cellulose and water;
   - mixing said cement, cellulose and water till obtaining a hardenable mixing suitable for laying or for producing manufactured articles.

9. A method according to claim 8, wherein a certain quantity of air is introduced by force inside said mixing.

10. A method according to claim 9, wherein said air quantity is conveyed by a foam.

11. A method according to claim 10, wherein said foam is obtained by transforming a foaming liquid product mixed with water.

12. A method according to claim 9, wherein said air quantity is conveyed by a spongy material such as, for instance, ground polystyrene.

13. A cement-based soundproofing agglomerate obtained starting from a mixture as claimed in any of the preceding claims from 1 to 7, **characterised by** having a density in the range 200 ÷ 600 $kg/m^3$.

EP 1 496 028 A1

**European Patent Office**

# EUROPEAN SEARCH REPORT

Application Number

EP 03 42 5446

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 041 053 A (PIROTTA RICCARDO) 2 December 1981 (1981-12-02) * the whole document * --- | 1,2,4-6, 8-13 | C04B18/24 C04B28/02 //C04B111/52 |
| X | DE 100 10 554 A (LENTZEN & WOERNER GMBH & CO W) 20 September 2001 (2001-09-20) * the whole document * --- | 1-3,6-9, 12 | |
| X | GB 297 750 A (KARL SCHNEBLE) 30 May 1929 (1929-05-30) * page 1, line 9-47 * --- | 1-5,7,8 | |
| X | AT 394 714 B (KORNHOFF HEINZ) 10 June 1992 (1992-06-10) * the whole document * --- | 1-3,7-9 | |
| X | "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000158199 ISSN: 0009-2258 * abstract * --- | 1,2,6,8, 9,12 | |
| X | US 6 475 275 B1 (NEBESNAK EDWARD ET AL) 5 November 2002 (2002-11-05) * column 2, line 29 - column 4, line 33 * --- | 1,2,6-9 | TECHNICAL FIELDS SEARCHED (Int.Cl.7) C04B |
| X | DE 196 49 159 A (KUEPPERS BAUSTOFFE GMBH & CO K) 18 June 1998 (1998-06-18) * column 1, line 40 - column 2, line 3 * --- | 1-3,8 | |
| X | US 5 785 419 A (MCKELVEY PAUL A) 28 July 1998 (1998-07-28) * column 5, line 34-56 * --- | 1-3,8 | |
| A | US 5 824 148 A (CORNWELL CHARLES E) 20 October 1998 (1998-10-20) * the whole document * --- | | |

-/--

The present search report has been drawn up for all claims

| Place of search | Date of completion of the search | Examiner |
|---|---|---|
| MUNICH | 8 December 2003 | Gattinger, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

5

**European Patent Office**

**EUROPEAN SEARCH REPORT**

Application Number

EP 03 42 5446

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 92 10438 A (NAT POWER PLC) 25 June 1992 (1992-06-25) * abstract * ----- | | |
| | | | TECHNICAL FIELDS SEARCHED (Int.Cl.7) |

The present search report has been drawn up for all claims

| Place of search | Date of completion of the search | Examiner |
|---|---|---|
| MUNICH | 8 December 2003 | Gattinger, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 42 5446

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2003

| Patent document cited in search report | | Publication date | Patent family member(s) | | Publication date |
|---|---|---|---|---|---|
| EP 0041053 | A | 02-12-1981 | IT | 1224255 B | 04-10-1990 |
| | | | AR | 226724 A1 | 13-08-1982 |
| | | | AU | 7095081 A | 26-11-1981 |
| | | | EP | 0041053 A1 | 02-12-1981 |
| | | | JP | 57042587 A | 10-03-1982 |
| | | | ZA | 8103394 A | 30-06-1982 |
| DE 10010554 | A | 20-09-2001 | DE | 10010554 A1 | 20-09-2001 |
| GB 297750 | A | 30-05-1929 | NONE | | |
| AT 394714 | B | 10-06-1992 | AT | 125186 A | 15-11-1991 |
| US 6475275 | B1 | 05-11-2002 | AU | 767059 B2 | 30-10-2003 |
| | | | AU | 1221701 A | 30-04-2001 |
| | | | BR | 0014975 A | 18-06-2002 |
| | | | CA | 2388499 A1 | 26-04-2001 |
| | | | CN | 1411396 T | 16-04-2003 |
| | | | EP | 1235651 A1 | 04-09-2002 |
| | | | WO | 0128697 A1 | 26-04-2001 |
| DE 19649159 | A | 18-06-1998 | DE | 19649159 A1 | 18-06-1998 |
| US 5785419 | A | 28-07-1998 | AU | 4653396 A | 31-07-1996 |
| | | | WO | 9621566 A1 | 18-07-1996 |
| US 5824148 | A | 20-10-1998 | AU | 734403 B2 | 14-06-2001 |
| | | | AU | 7171598 A | 08-12-1998 |
| | | | JP | 3386820 B2 | 17-03-2003 |
| | | | JP | 2000514032 T | 24-10-2000 |
| | | | WO | 9851639 A1 | 19-11-1998 |
| | | | ZA | 9803758 A | 24-11-1998 |
| WO 9210438 | A | 25-06-1992 | AU | 664162 B2 | 09-11-1995 |
| | | | AU | 9034991 A | 08-07-1992 |
| | | | CA | 2097699 A1 | 08-06-1992 |
| | | | CN | 1062888 A | 22-07-1992 |
| | | | DE | 69119606 D1 | 20-06-1996 |
| | | | DE | 69119606 T2 | 19-09-1996 |
| | | | DK | 560837 T3 | 30-09-1996 |
| | | | EP | 0560837 A1 | 22-09-1993 |
| | | | ES | 2089487 T3 | 01-10-1996 |
| | | | WO | 9210438 A1 | 25-06-1992 |
| | | | GR | 3020801 T3 | 30-11-1996 |
| | | | JP | 6503061 T | 07-04-1994 |
| | | | ZA | 9109578 A | 04-06-1993 |

EPO FORM P0459

For more details about this annex : see Official Journal of the European Patent Office, No. 12/82